(19) Europäisches Patentamt
European Patent Office
Office européen des brevets

(11) **EP 1 800 858 B1**

(12) **EUROPÄISCHE PATENTSCHRIFT**

(45) Veröffentlichungstag und Bekanntmachung des Hinweises auf die Patenterteilung:
**28.07.2010   Patentblatt 2010/30**

(51) Int Cl.:
*B32B 27/10* *(2006.01)*          *B32B 27/12* *(2006.01)*
*D21H 27/36* *(2006.01)*          *B42D 15/00* *(2006.01)*
*B41M 3/14* *(2006.01)*

(21) Anmeldenummer: 05028117.9

(22) Anmeldetag: **22.12.2005**

(54) **PAPIER-FOLIEN-LAMINAT**

PAPER-FILM LAMINATE

STRATIFIÉ EN PAPIER-FILM

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**27.06.2007   Patentblatt 2007/26**

(73) Patentinhaber: **Sihl GmbH**
**52355 Düren (DE)**

(72) Erfinder:
• **Buchbinder, Elisabeth**
**52385 Nideggen (DE)**

• **Niemöller, Axel, Dr.**
**52355 Düren Niederau (DE)**

(74) Vertreter: **Polypatent**
**Postfach 40 02 43**
**51410 Bergisch Gladbach (DE)**

(56) Entgegenhaltungen:
**EP-A- 0 247 797          EP-A- 0 628 408**
**EP-A- 1 036 665          US-A- 5 962 099**
**US-A1- 2001 005 543**

**Beschreibung**

Die vorliegende Erfindung betrifft ein 3-fach Laminat aus (Papier oder Vlies) - Folie - (Papier oder Vlies) mit speziellen sichtbaren Merkmalen, die die Wiedererkennung und Fälschungssicherheit, z. B. den Kopierschutz des Verbundmaterials garantieren. Diese Laminate können z. B. für die Herstellung von Dokumenten, Fluggepäckanhängern, Eintrittskarten, Etiketten, Beutel, Verpackungsmaterialien, großformatige Werbebilder, Plakaten oder Postern, Verpackungsbändern und Tapeten eingesetzt werden. Insbesondere sind sie geeignet für den Einsatz als einreißfeste Briefhüllen, ohne hierauf beschränkt zu sein. Das Laminat ist auf einer oder auf beiden Seiten mit analogen oder digitalen Druckverfahren gut bedruckbar, z. B. durch Offset-Druck, Tiefdruck, Direkt-Thermo-Druck, Thermotransferdruck, Ink-Jet-Druck, Elektrophotographie und Laserdruck mit festen oder flüssigen Tonern, wobei die zu wählende Druckart abhängig ist von der Auswahl der Papiere oder Vliese, die eingesetzt werden. Die Laminate haben aufgrund der verwendeten Folien eine hervorragende Einreißfestigkeit.

Einreißfeste Laminate aus Papieren und Folien sind für die o. a. Einsatzzwecke seit langem bekannt. Diese Laminate haben äußerlich betrachtet Eigenschaften wie normale Papiere oder Vliese, da die innenliegende Folie nicht sichtbar ist und der Papier(Vlies-)charakter dadurch im Vordergrund steht. Lediglich beim Reißversuch kann das Vorhandensein einer Folie festgestellt werden. Die Verstärkungswirkung der Folie wird für Anwendungen genutzt, in denen reines Papier wegen seiner zu geringen mechanischen Festigkeit nicht oder nur mit Problemen eingesetzt werden könnte. Für einige der Anwendungen werden Sicherheitsmerkmale gefordert, um Fälschungen zu erschweren oder auszuschließen, die bisher in einem solchen 3-fach Laminat nicht verwirklicht werden konnten. Hierzu zählt z. B. ein effektiver Kopierschutz. In anderen Anwendungen ist die Wiedererkennung als Sicherheits- oder Echtheitsmerkmal wichtig, damit die Echtheit und Unversehrtheit des Materials vom Endverbraucher ohne Hilfsmittel erkannt werden kann. So kann das hier beschriebene neuartige Material z.B. als Briefhülle zum Versand von Checkkarten oder Wertgegenständen eingesetzt werden, da es einreißfest ist und aufgrund der einzigartigen Oberfläche sofort erkannt werden kann, bzw. nach dem Öffnen die Originalität bestätigt, wenn die speziellen Merkmale nur innen ausgebildet sind. Eintrittskarten (Tickets) oder Fahrscheine aus diesem Material sind für jeden sofort als echt erkennbar und können nicht kopiert werden, da eine Kopie auf Papier weder die spezielle Struktur der Oberfläche noch die Einreißfestigkeit hat. Bisher bekannte 3-fach-Laminate aus Papier(Vlies)-Folie-Papier(Vlies) weisen möglichst gleichmäßige und wenig strukturierte Oberflächen auf, um den Papiercharakter hervorzuheben. Sicherheitsmerkmale müssen dann nachträglich aufgebracht werden, z. B. durch aufwändige Bedruckung mit Spezialdruckfarben, wie fluoreszierenden Farben, oder durch Transfer von Hologrammen von entsprechend bedruckten Folien. Die hier vorgestellten neuen Materialien enthalten eigene Sicherheitsmerkmale ohne wesentliche Zusatzkosten und ermöglichen damit für verschiedene Anwendungen kostengünstige Lösungen oder können als zusätzliches Sicherheitsmerkmal genutzt werden.

In der EP-A 689 181 ist ein Nasslaminierprozess für Papier-Folien-Laminate beschrieben, der die Schritte Coronabehandlung der Folie, Beschichtung der Folie mit Klebstoff auf Wasserbasis und Vereinigung der nassen Folienbahn mit einem Papier in einem druckbeaufschlagten Spalt beschreibt. Der ganze Prozess wird bei einer Temperatur ausgeführt, die die Orientierungseigenschaften der Folie nicht verändert. Der Einsatzzweck der Laminate, auch als 3-fach-Laminat Papier-Folie-Papier, ist u.a. die Verwendung als Briefhüllen.

In der EP-A 011 274 ist ein Verpackungsmaterial für Behältnisse beschrieben, das aus einem Laminat aus Papier und Plastikfolie besteht, die durch einen geschmolzenen Harzklebstoff ohne die Verwendung von Lösemitteln verklebt sind.

Die US 3,669,822 beschreibt ein Folienlaminat mit einem dünnen Tissue-Papier, das mittels eines aufgesprühten wäßrigen Klebstoffes hergestellt wird.

Die DE 19535831 beschreibt ein transparentes Laminat aus zwei dünnen transparenten Papieren, die mittels Lösemittelkleber beidseitig gegen eine Folie, die zuvor beidseitig mit Kleber beschichtet und getrocknet wurde, trockenkaschiert werden. Wäßrige Kleber in Nasskaschierung sind bei Transparentpapier nicht einsetzbar, da diese Papiere in Kontakt mit Wasser zu Faltenbildung neigen.

In der US2005/0112345 A1 ist ein transluzentes 3-fach Laminat aus einer orientierten Polymerfolie mit zwei dünnen Papieren zwischen ca. 13 g/m$^2$ und 24 g/m$^2$ Flächengewicht beschrieben. Objekte, die in Kontakt mit dem Laminat kommen, sind durch das Laminat hindurch sichtbar. Als Einsatzzweck wird die Verwendung als Verpackungsmaterial, Briefhüllen, Restaurantmenuekarten und Bucheinbände genannt. Vorteil ist hier die gute Bedruckbarkeit des Laminates, die Feuchtebeständigkeit und in Durchsicht lesbare Schrift. Die Durchsichtigkeitseigenschaften können über das verwendete Papier modifiziert werden. Um die beschriebene gute Durchsicht zu erreichen, sind deswegen möglichst gleichmäßige Papiere einzusetzen.

In der US 6706388 B2 wird ein dekoratives Verpackungsmaterial aus einem Papier-FolienLaminat beschrieben, das auf der Rückseite einen Kaltsiegelkleber trägt. Die dem Klebstoff abgewandte dekorative Außenseite, entweder Papier oder Folie, je nachdem welche Seite mit dem Klebstoff beschichtet wird, kann metallisiert sein. Als Papiere werden solche mit einer Dicke von mehr als 75 μm beschrieben. Diese beschriebenen Papiere haben eine hohe Opazität.

Den Veröffentlichungen US 2001/0014392 A1, US 6,235,386 B1 und US 5,962,099 beschreiben analog zu der US 6,706,388 B2 ein Klebeband mit einem Haftkleber statt einem Kaltsiegelkleber, wobei die äußere Oberfläche des Kunststofffilmes metallisiert sein kann.

In den Produkten, die in WO 02/064365, US 6,699,541 B2, US 2004/0209024, US 2004/0166344, US 2003/0037512 und US 2003/0037511 beschrieben sind wird metallisiertes Papier als Außenlage in einem Papier-Folien-Verbund mit Kaltsiegelkleber verwendet, um eine dekorative äußere Oberfläche des Verpackungsmaterials zu erhalten.

Die US 2002/0068136 und die US 6,348,246 beschreiben bis zu 5-lagigen Verbunde aus 2 Folien und weiteren, optionalen Papieren, von denen die äußere Folie im Verbund metallisiert sein kann, um eine Feuchtebarriere in einer Verpackung zu erhalten.

Die US 5,565,252 offenbart einen Verbund aus Papier- Folie -Karton mit Wärmereflektionsfunktion für Decken- und Wandverkleidungen, der eine Metallisierung auf der äußeren Papieroberfläche trägt.

Auch in der US 5,786,064 kann die äußere Oberfläche des Papieres in einem Papier-Folien - Verbund metallisiert sein. Diese letztgenannten Dokumente beschreiben metallisierte Oberflächen auf der Außenseite der beanspruchten Verbundmaterialien. Dadurch haben die Papier-Folien-Verbundmaterialien einen starken, gleichmäßigen, metallisch reflektierenden Effekt.

Die EP-A-1 586 447 beschreibt die Herstellung von 2-fach und 3-fach Laminaten der Kombination Papier oder Vlies-Folie(-Papier oder Vlies), ohne jedoch auf eine visuelle Ausgestaltung des Papiers bzw. des Vliese und somit der erhaltenen Produkte einzugehen.

Das Dokument EP-A-0628408 beschreibt ein Sicherheitspapier, das Sicherheitsmerkmale auf einer zwischen zwei Papieren laminierten Folie enthält, wobei diese Merkmale auch als farbige Kennzeichnungen auf der Folie aufgebracht sein können.

Die Aufgabe der vorliegenden Erfindung ist es, ein Material zur Verfügung zu stellen, das eine eindeutige Wiedererkennbarkeit aufgrund seiner speziellen Oberfläche gewährleistet, die unter anderem als Sicherheitsmerkmal in verschiedenen Anwendungen dienen kann. Darüber hinaus ist es Aufgabe der Erfindung, ein Material zur Verfügung zu stellen, das einreißfest ist und wie Papier verarbeitet werden kann. Durch die erfindungsgemäße Auswahl von Papieren und Folien ist es möglich, individuell strukturierte und mit einem Sicherheitsaspekt versehene Materialien zur Verfügung zu stellen.

Diese Aufgabe wird gelöst durch ein undurchsichtiges 3-fach-Laminat aus Papier-Folie-Papier oder Vlies-Folie-Papier oder Vlies-Folie-Vlies dadurch gekennzeichnet, dass die Folie eine dünne Metall- oder Farbschicht trägt und mindestens eines der Papiere oder Vliese ein ungleichmäßiges Durchscheinen der Metallschicht erlaubt.

Überraschend wurde gefunden, dass 3-fach Laminate aus Papier(Vlies)-Folie-Papier(Vlies), die auf der Folienoberfläche eine Metallisierung oder Farbaufbringung enthalten und Papiere oder Vliese, die in einer Weise strukturiert sind, dass sie ein partielles Durchscheinen der Metall- oder Farbschicht erlauben, über den metallischen oder Farb-Effekt eindeutig zu identifizieren sind, aufgrund des komplexen Materialaufbaus nicht leicht gefälscht werden können und nicht kopierbar sind, da der Metall- oder Farbeffekt beim Scannen, Photographieren oder im Kopierer (Elektrophotographie) nicht erfasst werden kann. Durch Variation von Folien, Papieren und Klebstoff können verschiedene Strukturen und Farben ausgebildet werden und die Produkteigenschaften, z.B. Dicke, Steifigkeit, Bedruckbarkeit, Reißfestigkeit, eingestellt werden. Gemeinsam ist allen erfindungsgemäßen Produkten mindestens eine Oberfläche, die leicht erkennbare Farbunterschiede schon auf kleiner Fläche aufweist, die durch die metallisierte oder farbige Folie, eine eventuelle Lackierung der Folie, den aufgebrachten Klebstoff und das spezielle "wolkige", meist sehr dünne Papier/Vlies gekennzeichnet ist. Insbesondere sind die Farbunterschiede, gemessen an einzelnen Stellen auf einem DIN A4 Blatt im Vergleich zum Mittelwert von 30 Farbwerten dieses Blattes größer als Delta E gleich 0,5, bevorzugt größer als 1,0. Solche Farbunterschiede sind mit bloßem Auge gut erkennbar. Die durchscheinende Metallisierung oder Farbe gibt der Oberfläche einen speziellen spiegelnden oder farbigen Effekt. Die Verteilung der Farbunterschiede hängt von den eingesetzten Materialien und deren Verarbeitung ab, z.B. auch von der Gleichmäßigkeit des Klebstoffauftrages oder der Wolkigkeit der verwendeten Papiere oder Vliese.

Grundsätzlich können alle Folien verwendet werden, auf die eine dünne Metallschicht oder Farbschicht aufgebracht werden kann. Hierzu gehören Folien aus Polyolefinen, z. B. Polyethylen oder Polypropylen, Polyamid, Polyimid, Polyester, Polyurethan, Polyvinylchlorid, Polystyrol, Polyacrylat, Polycarbonat, Cellulosederivaten, z.B. Triacetylcellulose einschließlich Folien aus Copolymeren der genannten Polymeren sowie biologisch abbaubare Folien, z.B. aus Stärke oder Polyaminosäuren. Diese Folien können auf verschiedene Weise hergestellt sein und nicht verstreckt oder uniaxial oder biaxial verstreckt sein. Bevorzugt werden biaxial gestreckte Folien aus Polypropylen (BOPP) oder Polyethylentherephthalat (Typenbezeichnung z.B. Mylar oder Melinex der Fa. DuPont), die im Vakuum metallisiert werden. Diese Folien haben eine besonders hohe Einreißfestigkeit, eine hohe Temperaturbeständigkeit und erhalten durch die Metallisierung eine stark spiegelnde Oberfläche. Die Metallisierung wird in der Regel aus Kostengründen mit Aluminium durchgeführt, es können jedoch auch andere Metalle wie Silber, Kupfer, Gold etc. aufgedampft werden. Die Folien können transparent oder eingefärbt, z.B. weiß, sein. Im Falle, dass die Folie nicht transparent ist, wird das zur Ausbildung der wiedererkennbaren Oberfläche laminierte Papier bevorzugt auf der metallisierten Seite der Folie aufklebt. Die Oberflächen der Folien können behandelt sein, z.B. durch Coronaverfahren, durch Beflammung, chemische Behandlung oder Beschichtung. Dies führt insbesondere bei BOPP-Folien zu einer verbesserten Benetzung und Haftung des Klebstoffs und sichert somit eine hohe Verbundfestigkeit. Die Dicke der Folie wird je nach Anwendung ausgewählt. Sie kann zwischen 6 $\mu$m und 300 $\mu$m liegen, bevorzugt zwischen 12$\mu$m und 100 $\mu$m.

Die Metallschicht kann optional mit einer dünnen Lackierung versehen werden, die auch eine Einfärbung haben kann. Damit können insbesondere farbige Oberflächen erzeugt werden, die metallisch glänzen. So kann z.B. durch eine Gelbeinfärbung eines solchen klaren Lackes auf einer Aluminium-bedampften Folie ein Gold- oder Kupfereffekt erzeugt werden. Eine solche Lackierung hat typischerweise eine Dicke von 1 $\mu$m bis 5 $\mu$m, die Dicke ist jedoch für die Erfindung nicht limitierend.

Als Klebstoff können handelsübliche Kaschierkleber verwendet werden, die je nach Auswahl des Kaschierverfahrens und der Anwendungseigenschaften gewählt werden. So sind z.B. wäßrige Klebstoffe für die Nass- und Trockenkaschierung, lösemittelhaltige Klebstoffe für die Trockenkaschierung, Schmelzklebstoffe (Hotmeltkleber), lösemittelfreie Ein- oder Mehrkomponentenklebstoffe oder durch Strahlung härtende Klebstoffe geeignet. Der Klebstoffauftrag liegt im Bereich von 1 g/m$^2$ bis 10 g/m$^2$, bevorzugt im Bereich von 2 g/m$^2$ bis 6 g/m$^2$, ist jedoch für die Erfindung nicht limitierend. Die Klebstoffsysteme können eine oder mehrere zusätzliche Komponenten enthalten, z.B. Vernetzer. Durch geeignete Auswahl ist es möglich einen Verbund zu erzielen, der auch unter mechanischen Beanspruchungen, z.B. Knicken, nicht delaminiert oder auch wasserfest ist und damit für Außenanwendungen geeignet ist. Der Kleberauftrag kann ungleichmäßig erfolgen, z.B. mit einer bestimmten Streifigkeit oder Wolkigkeit. Dieser Effekt ist dann zusätzlich zu dem Metall- oder Farbeffekt durch das zukaschierte Papier zu erkennen. Hierdurch erzielt man weitere Gestaltungsmöglichkeiten, z.B. mit zusätzlicher dekorativer Ausprägung oder als zusätzliche Sicherheitseigenschaft. Ungleichmäßiger Kleberauftrag kann z.B. durch Walzenauftrag erfolgen, bei dem feine Strukturen durch die Filmtrennung im Walzenspalt entstehen. Die Auswahl der für die jeweils gewünschte Anwendung geeigneten Klebstoff(system)e liegen im Bereich üblichen Könnens eines Fachmannes auf dem Gebiet der Laminate und beschränkt nicht auf die hier beschriebene Erfindung.

Mindestens eines der beiden außenliegenden Papiere oder Vliese des 3-fach Verbundes ist so ausgewählt, dass es partiell so transparent ist, dass die darunterliegende Metallisierung oder Farbe an den transparenteren Stellen sichtbar ist. Um die erfindungsgemäße Ungleichmäßigkeit des Farbeindrucks mindestens einer Seite des Verbundes zu erzielen, ist deshalb bevorzugt ein wolkiges bis stark wolkiges Papier oder Vlies auszuwählen. Solche Papiere sind in der Regel sehr dünn und haben ein Flächengewicht von 10 g/m$^2$ bis 50 g/m$^2$, bevorzugt 13 g/m$^2$ bis 30 g/m$^2$. Geeignete Papiere sind z.B. einseitig glatte Verpackungspapiere, Bibeldruckpapiere, Seidenpapiere oder Zigarettenpapiere. Die Papiere können weiß, gering oder stark farbig sein. Bevorzugt wird - falls vorhanden - die glattere Seite der Papiere mittels des Klebstoffs mit der Folie verbunden. Die Folie trägt ein- oder beidseitig (eine) dünne Metall- oder Farbschicht(en) und mindestens eine der äußeren Oberflächen der Papiere oder Vliese weist nach der Kaschierung Stellen auf, die eine Farbabweichung Delta E einzelner Stellen von mindestens 0,5, bevorzugt mindestens 1,0, zum Mittelwert der Farbwerte von 30 zufällig verteilten Messpunkten auf einem DIN A4-Blatt aufweist.

Eine Seite des Verbundes kann mit einem Papier verklebt sein, das eine gleichmäßige Struktur aufweist und eine funktionelle Oberfläche aufweisen kann. Insbesondere sind solche Oberflächen, die dann auf der folienabgewandten Seite des Verbundes liegen, gut bedruckbar in verschiedenen Druckverfahren. So können für die Kaschierung dieser einen Seite des Laminats unter anderem ungestrichene oder gestrichene Papiere, hitzesensitive Papiere (Thermopapiere), Ink-Jet-Papiere, Laserdruckpapiere oder Thermotransferpapiere eingesetzt werden. Das Flächengewicht solcher Papiere kann zwischen 25 g/m$^2$ und 150 g/m$^2$ liegen, bevorzugt zwischen 50 g/m$^2$ und 100 g/m$^2$. Diese Papiere können eingefärbt oder strukturiert sein, um besondere Effekte zu bewirken, sie ergeben aber alleine nicht den erfindungsgemäßen Effekt. Sie besitzen in der Regel eine gleichmäßige Opazität und lassen die Metallisierung der Folien nicht so durchscheinen, dass eine unregelmäßige, typische Struktur erkennbar ist.

Alternativ zu Papier können Vliese eingesetzt werden. Diese nicht-gewebten bahnförmigen Fasermaterialien sind insbesondere dann gegenüber Papier zu bevorzugen, wenn eine Kunststoffoberfläche geeigneter ist, z.B. als Verpackungsmaterial für kratzempfindliche Produkte, wenn eine oder beide Außenlagen wasserfest sein sollten, oder eine besonders hohe Weiterreißfestigkeit gewünscht ist. Diese Vliese können aus Natur- oder Kunststofffasern, wie z.B. aus Polyolefinen, Polyester, Polyamid bestehen, und durch Trockenlegen, Naßlegen oder Spinnverfahren erhalten werden. Sie haben üblicherweise ein Flächengewicht zwischen 10 g/m2 und 300 g/m$^2$, wobei für die erfindungsgemäße Anwendung niedrige Flächengewichte bevorzugt sind.

Wichtig für die Auswahl der Papiere oder Vliese ist es, dass die Opazität der Materialien so starken Schwankungen unterliegt, dass der erfindungsgemäße Effekt der sichtbaren Farbschwankungen auf mindestens einer der äußeren Oberflächen des Verbundmaterials erzielt wird.

Die erfindungsgemäßen Produkte können in herkömmlicher Weise nach bekannten Verfahren des Beschichtens, Metallisierens und Kaschierens hergestellt werden. Insbesondere beim Kaschieren gibt es verschiedene Verfahren, die zu jeweils ähnlich guten Ergebnissen führen. Hier sind insbesondere zu erwähnen: Trockenkaschierverfahren mit wäßrigen oder lösemittelhaltigen Klebstoffen, Nasskaschierverfahren mit wäßrigen Klebstoffen, Lösemittelfreie Kaschierung mit 1-Komponenten- oder 2-Komponenten-Klebern, Hotmelt-Kaschierung und Kaschierung mit durch Strahlung härtenden Klebstoffen. Wirtschaftlich vorteilhaft ist die Herstellung des 3-fach Verbundes in einem Arbeitsgang. Ein solches Verfahren ist z.B. in EP-A 1 586 447 ausführlich beschrieben.

Die erfindungsgemäßen Produkte enthalten eine innenliegende, metallisierte oder farbige Folie, die beidseitig mit einem Vlies oder Papier beklebt ist. Die Folie kann ein- oder beidseitig metallisiert und/oder gefärbt bzw. mit einer Farbschicht versehen sein. Mindestens eines der Papiere/Vliese ist so ausgewählt, dass der erfindungsgemäße Effekt auftritt, nämlich die Metallisierung/Färbung der Folie durch das Papier partiell sichtbar ist. Bei transparenten Folien ist es bei einseitiger Metallisierung oder Farbgebung nicht wichtig, auf welcher Seite die Metallisierung/Färbung angebracht ist, da der Metall- oder Farbeffekt auch durch die Folie sichtbar ist. Bei nicht-transparenten Folien muss die Metallisierung/Färbung auf der Seite der Folie aufgebracht sein, die dem für den Effekt ausgewählten Papier zugewandt ist. Optional kann einseitig oder beidseitig eine Lackierung, die auch eingefärbt sein kann, auf die Folie oder die metallisierte Seite der Folie aufgebracht sein, um spezielle Farbeffekte zu erzielen, wie zum Beispiel einen Goldeffekt durch Gelbeinfärbung auf einer Aluminium-bedampften Schicht, oder um die Metallschicht zu schützen.

Die erfindungsgemäßen 3-fach Verbunde haben besondere Eigenschaften, die für verschiedene Anwendungen Vorteile gegenüber herkömmlichen Produkten wie ein- oder mehrlagigen Papieren, Vliesen oder herkömmlichen 3-fach Verbunden Papier(Vlies)-Folie-Papier(Vlies) aufweisen. Sie sind in hohem Maße reißfest. Gemessen nach ISO2493 erhält man eine Reißfestigkeit, die zwischen 40 N/15mm und 3000 N/15 mm liegt. Wenn biaxial gestreckte Kunststofffolien verwendet werden, erhält man eine hohe Einreißfestigkeit, die Weiterreißfestigkeit ist dann in der Regel niedrig. Mit uniaxial gestreckten Folien erreicht man nur in der Querrichtung zur Orientierung eine hohe Weiterreißfestigkeit, mit nichtorientierten Folien oder Vliesen erhält man dagegen sowohl eine gute Einreißfestigkeit als auch eine gute Weiterreißfestigkeit.

Bei Auswahl eines geeigneten Klebstoffsystems ist es möglich wasserfeste und knickbeständige Verbunde herzustellen. Durch die Metallisierung der Folie erhält das erfindungsgemäße Produkt eine sehr hohe Opazität von über 99 %, ist also blickdicht. Dies ist wichtig für viele Anwendungen, z.B. wenn das mit dem Verbundmaterial verpackte Produkt oder das gesicherte Gut nicht sichtbar sein soll. Die erfindungsgemäße Effektoberfläche hat einen hohen Wiedererkennungswert und stellt damit ein eindeutiges Orginalitäts- und Sicherheitsmerkmal dar, das sofort ohne weitere Hilfsmittel erkannt werden kann. Informationen, die auf die Oberfläche gedruckt sind, können nicht durch Kopieren, Scannen oder Photographieren vervielfältigt werden, ohne dass das Sicherheitsmerkmal der ungleichmäßig durchscheinenden Metallisierung in seiner Wirkung verschwindet. Deshalb kann das erfindungsgemäße Laminat z.B. für Eintrittskarten oder Fahrkarten verwendet werden, die vor Fälschungen geschützt werden sollen. Es hat zudem durch den durchscheinenden metallischen Glanz ein besonderes, hochwertiges Aussehen. Je nach Auswahl des Papieres oder Vlieses kann man auch dekorative, z.B. eingefärbte Oberflächen, erzeugen. Durch geeignete Auswahl des Papiers/ Vlieses für die zweite Produktseite kann man weitere Produkteigenschaften bestimmen, z.B. durch Auswahl gleichförmiger, auch dickerer Papiere mit gleichmäßiger Opazität. Es ist damit möglich, spezielle papierähnliche Materialien zu erzeugen, die in allen bekannten analogen und digitalen Druckverfahren bedruckt werden können.

Testmethoden:

Bestimmung des erfindungsgemäßen Erkennungs-/Sicherheitsmerkmales durch Farbmessung: Auf einem DIN A4 Blatt des erfindungsgemäßen Materials werden Farbwerte L*, a* und b* von der Seite, auf der die Metallisierung durchscheint, nach DIN 6174 mittels eines Farbmessgerätes, z.B. der Firma Gretag Spectroscan mit Lichtart D50, 2° Geometrie und 4 mm Messblende, 30 mal an über das Blatt verteilten Stellen gemessen. Die mittlere Farbe dieses Blattes ergibt sich durch Mittelwertbildung aus den jeweils 30 Einzelwerten L*, a* und b* zu $L_m^*$, $a_m^*$ und $b_m^*$. Zu jedem der Einzelwerte L*, a* und b* wird ein Farbabstand Delta E zum Farbmittelwert bestimmt, der folgendermaßen berechnet wird:

$$\text{Delta E} = \text{Wurzel} \left( (L^* - L_m^*)^2 + (a^* - a_m^*)^2 + (b^* - b_m^*)^2 \right)$$

Dieser Farbabstand ist ein Maß für die Farbabweichungen an einzelnen Punkten des Blattes.

Opazität:

Die Opazität der verwendeten Papiere oder Verbunde wird nach DIN 53146, (ISO 2471) bestimmt.

Verbundhaftung:

Die Verbundhaftung wird am fertigen Verbund bestimmt, indem man von Hand oder durch eine Zugprüfmaschine in Querrichtung zur Bahn versucht, das Papier von der Folie zu trennen. Hierfür beginnt man bevorzugt mit dem Delaminierversuch an einem nicht mit Kleber beschichteten Rand einer Bahn. Die Verbundhaftung ist ausgezeichnet, wenn das Papier oder die Folie reißt, ohne daß Delaminierung auftritt.

Wasserfestigkeit:

Der fertige Verbund wird 24 Stunden bei Raumtemperatur in Leitungswasser eingetaucht. Die Wasserfestigkeit ist gegeben, wenn keine Delaminierung der Einzelbahnen auftritt. Für anspruchsvollere Anwendungen darf der Verbund auch nicht delaminierbar sein, wenn man versucht die nassen Bahnen voneinander abzuziehen. Das Testresultat wird in Stufen von 1 bis 5 bewertet, wobei die Note 1 für einen nicht-delaminierbaren Verbund steht und 5 für einen leicht zu delaminierenden Verbund.

Mechanische Festigkeit:

Einreißfestigkeit und Bruchlast werden nach ASTM-D-1004 und ISO 1924 bestimmt.

Beispiele:

Beispiel 1:

Eine 30$\mu$m dicke biaxial orientierte Polypropylenfolie (OPP-Folie) mit beidseitiger Coronavorbehandlung wird im Vakuum mit Aluminium bedampft. Diese Folie hat eine Opazität von 98% und wird zur Kaschierung mit einem wäßrigen, vernetzbaren Acrylatklebstoff beidseitig beschichtet und mit zwei verschiedenen Papieren nasskaschiert. Die eine Seite wird mit einem 18 g/m$^2$ Zigarettenpapier kaschiert, die andere mit einem 50 g Offsetdruckpapier. Die Opazität des Verbundes liegt über 99 %, die Einreißfestigkeit nach ASTM D 1004-90] beträgt in Längsrichtung 25 N und in Querrichtung 21N. Der Verbund hat eine sehr gute Verbundhaftung und eine ausgezeichnete Wasserfestigkeit (Stufe 5). Die Farbmittelwerte aus 30 Messwerten auf einem DIN A4 Blatt ergeben sich zu $L_m^*$ = 88,7, $a_m^*$= -0,4 und $b_m^*$ = -0,5 auf der Seite des Zigarettenpapiers mit Farbabweichungen Delta E von bis zu 1,24, abhängig vom Messort. Die andere Seite des Papieres hat Mittelwerte von $L_m^*$ = 91,9, $a_m^*$ = -2,0 und $b_m^*$ = -7,7 und einen maximale Farbabweichung von 0,36 unter 30 Messwerten. Der Verbund hat damit eine sehr gleichmäßige Papierseite und eine erfindungsgemäße, strukturierte Papierseite, auf der die Metallisierung partiell durchscheint. Die Struktur ist direkt erkennbar und hat eine typischen metallischen Effekt. Ein Farbausdruck mit einem Ink-jet Drucker auf dieser strukturierten Seite ist möglich, die Strukturierung und der metallische Effekt sind jedoch auf einer Farbkopie, hergestellt mit einem Laserfarbkopierer, nicht mehr sichtbar, auch wenn man die Wiedergabehelligkeit variiert. Damit ist ein wirksamer Kopierschutz gegeben.

Beispiel 2 (Vergleichsbeispiel):

Die Kaschierung wird wie in Beispiel 1 durchgeführt, außer dass beidseitig das 50 g Papier aufkaschiert wird. Dieser Verbund hat beidseitig eine gleichmäßige Einfärbung und eine maximale Farbabweichung von Delta E gleich 0,4, die nicht als besondere Struktur wahrgenommen wird. Ein Kopierschutz ist damit nicht gegeben, da Kopien dem Original zu sehr ähneln, zumal wenn ein etwa gleich eingefärbtes Papier verwendet wird.

Beispiel 3:

Eine einseitig mit Aluminium metallisierte 35$\mu$m dicke OPP Folie, (Bezeichnung Manucor S1M met) wird im ersten Arbeitsgang mittels eines lösemittelbasierten Trockenkaschierklebers auf Polyurethan-Basis mit der nicht-metallisierten Seite gegen die Rückseite eines matten 80g Papieres, das gute Ink-Jet-Druckeigenschaften durch eine Pigmentbeschichtung der Vorderseite aufweist, kaschiert. Im zweiten Arbeitsgang wird ein 20g Spinnvlies auf Polypropylenbasis gegen die metallisierte Seite der Folie kaschiert. Der Klebstoffauftrag liegt bei jeweils 4g/m$^2$ trocken. Der Verbund hat zur Vliesseite eine gute Verbundhaftung und Wasserfestigkeit (Stufe 4). Zur Papierseite sind Verbundhaftung und Wasserfestigkeit ausgezeichnet (Stufe 5). Der Verbund hat vorderseitig (zur Ink-Jetbedruckbaren Seite) bei einer Farbortmessung im Mittel Farbwerte (Lab-Werte) von $L_m^*$=93,2, $a_m^*$=2,1 und $b_m^*$=-6,2, und bei 30 Meßwerten eine maximale Abweichung von Delta E gleich 0,2.Rückseitig (zur Vliesseite) werden im Mittel Farbwerte von $L_m^*$=79,9, $a_m^*$=-0,1, $b_m^*$=-0,6 gemessen. Die maximale Abweichung Delta E bei 30 Meßwerten liegt bei 3,8.

Die Opazität beträgt 100%; Die Einreißfestigkeit liegt in Längs- und Querrichtung bei 30N,; die Bruchlast bei 110N/15mm in Längsrichtung und 173N/15mm in Querrichtung. Das Verbundmaterial wird als Briefhüllenmaterial (Umschlag) für kratzempfindlicht Güter eingesetzt, z.B. Checkkarten oder CDs. Es kann aufgrund der Ink-Jet-Beschichtung hervorragend mittels eines Tintenstrahl (Ink-Jet-)-Druckers bedruckt werden. Nach Öffnen des Umschlags kann sofort festgestellt werden, dass die besondere Struktur auf der Innenseite vorhanden ist und damit eine Fälschung ausgeschlossen werden.

Beispiel 4:

Eine 38μm dicke, weiße, einseitig mit Aluminium metallisierte OPP-Folie (Bezeichnung: Metallyte MW280) wird mit einem wässrigen Acrylatklebstoff beidseitig beschichtet und mit zwei Papieren nasskaschiert. Auf die metallisierte Seite der Folie wird ein 25g Papier (25 g/m²) mit Opazitätsschwankungen und zur weißen Seite wird ein gleichmäßiges 40g Papier kaschiert. Die Farbmittelwerte aus 30 Meßwerten liegen zur weißen Folienseite bei $L_m^*$=95.3, $a_m^*$=2,7 $b_m^*$=-7,6. Die maximale Farbabweichung Delta E bei 30 Meßwerten liegt bei 0,3. Zur metallisierten Seite liegen die Farbmittelwerte bei $L_m^*$=87,9, am*=1,2 und $b_m^*$=-6-6. Die maximale Farbabweichung Delta E liegt bei 1,7. Verbundhaftung und Wasserfestigkeit sind zu beiden Seiten ausgezeichnet (Stufe 5). Die Opazität liegt bei 99,8%. Die Bruchlast beträgt in Längsrichtung 130N/15mm und in Querrichtung 70N/15mm.
Das Verbundmaterial kann als Fahrschein für Busse und Bahnen oder als Eintrittskarte für z.B. Sport- oder Konzertveranstaltungen, eingesetzt werden. Es ist reißfest und damit haltbar, z.B. in der Anwendung als Dauerkarte oder Mehrfachfahrschein, auf beiden Seiten leicht bedruckbar, wobei die strukturierte Seite bevorzugt so wenig bedruckt wird, dass die Farbunterschiede noch gut sichtbar sind. Diese Farbstruktur ist ein wirksames Mittel gegen Fälschungen, beispielsweise einer Kopie, und kann von Kontrolleuren leicht ohne Hilfsmittel identifiziert werden.

Beispiel 5

Eine einseitig mit Aluminium metallisierte, transparente 12μm dicke Polyesterfolie wird zur Erzielung eines Goldeffektes auf der metallisierten Seite mit einem gelbfarbenen Lack beschichtet. Aufgrund der hohen Transparenz der Folie ist die Metallisierung auf der anderen, nicht goldfarbenen Seite, silbrig-metallisch erkennbar. Anschließend wird die Folie mit einem wässerigen, vernetzbaren Acrylatklebstoff in einem Arbeitsgang beidseitig beschichtet und beidseitig mit dem gleichen 24g Papier mit starken Opazitätsschwankungen kaschiert. Zu einer Seite hat das resultierende Verbundmaterial ein strukturiertes Aussehen mit metallisch aluminiumfarbenen durchscheinenden Bereichen, zur anderen Seite goldfarbene durchscheinende Bereiche mit ähnlicher Struktur wie auf der ersten Seite. Die Opazität des Verbundes liegt bei 99%. Die Bruchlast in Längs- und Querrichtung beträgt 122 bzw. 67N/15mm; die Einreißfestigkeit liegt bei 20N (Längsrichtung) bzw. 25N/15mm (Querrichtung). Di Mittelwerte von je 30 Farbwerten L*, a* und b* wurden zur silberfarbenen Seite mit $L_m^*$=88,2, am*=1,2, $b_m^*$=-6,8und zur goldfarbenen Seite mit $L_m^*$=75,8, am*=9,1, $b_m^*$=10,4 bestimmt. Die maximale Farbabweichung Delta E- beträgt 2,02 zur silberfarbenen Seite und 5,88 zur goldfarbenen Seite.
Das beschriebene Verbundmaterial kann unter anderem als dekoratives Anhängeetikett, z.B. für Preisauszeichnungen, oder als Verpackungsmaterial, z.B. für die Herstellung von Verpackungsbeuteln, verwendet werden.

**Patentansprüche**

1. Undurchsichtiges 3-fach-Laminat aus Papier-Folie-Papier oder Vlies-Folie-Papier oder Vlies-Folie-Vlies, wobei die Folie eine dünne Metallschicht, die in einem Vakuumverdampfungsprozess aufgebracht ist und im wesentlichen aus Aluminium, Kupfer oder Silber besteht, oder eine dünne Farbschicht trägt,
   **dadurch gekennzeichnet, dass**
   mindestens eines der beiden außenliegenden Papiere oder Vliese partiell so transparent ist, dass die darunterliegende Metallisierung oder Farbe an den transparenteren Stellen sichtbar ist und so mindestens eines der Papiere oder Vliese ein ungleichmäßiges Durchscheinen der Metall- oder Farbschicht erlaubt, so dass mindestens eine der äußeren Oberflächen der Papiere oder Vliese Stellen aufweist, die eine Farbabweichung Delta E von mindestens 0,5, bevorzugt mindestens 1,0, zum Mittelwert der Farbwerte von 30 zufällig verteilten Messpunkten auf einem DIN A4-Blatt haben.

2. Laminat nach Anspruch 1, **dadurch gekennzeichnet, dass** mindestens eines der beiden außenliegenden Papiere oder Vliese ein wolkiges bis stark wolkiges Papier oder Vlies, vorzugsweise ein einseitig glattes Verpackungspapier, Bibeldruckpapier, Seidenpapier oder Zigarettenpapier, ist.

3. Laminat nach Anspruch 1 oder 2, **dadurch gekennzeichnet, dass** die Folie eine Polyesterfolie, eine Polypropylenfolie oder eine Polyethylenfolie ist und eine Dicke von 6 μm bis 300 μm aufweist, bevorzugt 12 μm bis 100 μm.

4. Laminat nach einem der vorhergehenden Ansprüche, **dadurch gekennzeichnet, dass** mindestens eines der Papiere oder Vliese ein Flächengewicht von 10 g/m² bis 50 g/m² aufweist.

**5.** Laminat nach einem der vorhergehenden Ansprüche, **dadurch gekennzeichnet, dass** mindestens eines der Papiere oder Vliese eine Beschichtung aufweist, die dessen Bedruckbarkeit verbessert.

**6.** Laminat nach einem der vorhergehenden Ansprüche, **dadurch gekennzeichnet, dass** mindestens eines der Papiere oder Vliese eine Beschichtung aufweist, die Ink-Jet bedruckbar, Thermobedruckbar, Thermotransferbedruckbar oder im Laserdruck bedruckbar ist.

**7.** Laminat nach einem der vorhergehenden Ansprüche, **dadurch gekennzeichnet, dass** zwischen Folie und Klebstoff eine Lackschicht aufgebracht ist, die bevorzugt eine Einfärbung hat.

**8.** Laminat nach einem der vorhergehenden Ansprüche, **dadurch gekennzeichnet, dass** die Opazität des 3-fach Verbundes, gemessen nach DIN 53146 (ISO 2471 ), über 97 % , bevorzugt über 99 % liegt.

**9.** Laminat nach einem der vorhergehenden Ansprüche, **dadurch gekennzeichnet, dass** die Bruchlast des Verbundes, gemessen nach ISO 1924 zwischen 40 N/15mm und 3000 N/15 mm liegt.

## Claims

**1.** Nontransparent 3-ply paper-film-paper or nonwoven-film-paper or nonwoven-film-nonwoven laminate wherein the film carries a thin color layer or a thin metal layer which is applied in a vacuum evaporation process and which consists substantially of aluminum, copper or silver,
**characterized in that**
at least one of the two outer papers or nonwovens is partially transparent such that the underlying metallization or color is visible at the transparent locations and so at least one of the papers or nonwovens allows the metal layer or color layer to show through nonuniformly, so that at least one of the outer surfaces of the papers or nonwovens has locations which have a color difference delta E of at least 0.5, preferably at least 1.0, with respect to the average value of the color values of 30 randomly distributed measurement points on a DIN A4 sheet.

**2.** Laminate according to claim 1, **characterized in that** at least one of the two outer papers or nonwovens is a cloudy or highly cloudy paper or nonwoven, preferably a machine-glazed packaging paper, bible paper, tissue paper or cigarette paper.

**3.** Laminate according to claim 1 or 2, **characterized in that** the film is a polyester film, a polypropylene film or a polyethylene film and has a thickness of 6 $\mu$m to 300 $\mu$m, preferably 12 $\mu$m to 100 $\mu$m.

**4.** Laminate according to any of the preceding claims, **characterized in that** at least one of the papers or nonwovens has a basis weight of 10 g/m$^2$ to 50 g/m$^2$.

**5.** Laminate according to any of the preceding claims, **characterized in that** at least one of the papers or nonwovens has a coating which enhances printability.

**6.** Laminate according to any of the preceding claims, **characterized in that** at least one of the papers or nonwovens has a coating which is printable by inkjet printing, thermal printing, thermal transfer printing or laser printing.

**7.** Laminate according to any of the preceding claims, **characterized in that** a varnish layer which preferably has a coloration is applied between film and adhesive.

**8.** Laminate according to any of the preceding claims, **characterized in that** the opacity of the 3-ply composite, measured according to DIN 53146 (ISO 2471) is above 97%, preferably above 99%.

**9.** Laminate according to any of the preceding claims, **characterized in that** the breaking load of the composite, measured according to ISO 1924 is between 40 N/15 mm and 3000 N/15 mm.

## Revendications

**1.** Stratifié à trois couches non transparent composé de papier-film-papier ou de non-tissé-film-papier ou de non-tissé-film-non-tissé, le film portant une mince couche métallique qui est appliquée dans un processus d'évaporation sous vide et se compose essentiellement d'aluminium, de cuivre ou d'argent, ou une mince couche de couleur, **caractérisé en ce qu'**au moins l'un des deux papiers ou non-tissés extérieurs est partiellement transparent de sorte que la métallisation ou couleur sous-jacente soit visible aux endroits transparents et au moins l'un des papiers ou non-tissés permette une transparence non uniforme de la couche métallique ou de couleur de sorte qu'au moins l'une des surfaces extérieures des papiers ou non-tissés présente des endroits qui ont un écart de couleur Delta E d'au moins 0,5, de préférence d'au moins 1,0 par rapport à la valeur moyenne des valeurs de couleur de 30 points de mesure répartis au hasard sur une feuille DIN A4.

2. Stratifié selon la revendication 1, **caractérisé en ce qu'**au moins l'un des deux papiers ou non-tissés extérieurs est un papier ou un non-tissé trouble à très trouble, de préférence un papier d'emballage, un papier bible, un papier de soie ou un papier à cigarette lisse d'un côté.

3. Stratifié selon la revendication 1 ou 2, **caractérisé en ce que** le film est un film de polyester, un film de polypropylène ou un film de polyéthylène et présente une épaisseur de 6 à 300 $\mu$m, de préférence de 12 à 100 $\mu$m.

4. Stratifié selon l'une quelconque des revendications précédentes, **caractérisé en ce qu'**au moins l'un des papiers ou non-tissés présente un grammage de 10 à 50 g/m$^2$.

5. Stratifié selon l'une quelconque des revendications précédentes, **caractérisé en ce qu'**au moins l'un des papiers ou non-tissés présente un revêtement qui améliore sa facilité d'impression.

6. Stratifié selon l'une quelconque des revendications précédentes, **caractérisé en ce qu'**au moins l'un des papiers ou non-tissés présente un revêtement qui peut être imprimé au jet d'encre, thermiquement ou par transfert thermique ou au laser.

7. Stratifié selon l'une quelconque des revendications précédentes, **caractérisé en ce qu'**une couche de laque qui présente de préférence un encrage, est appliquée entre le film et la colle.

8. Stratifié selon l'une quelconque des revendications précédentes, **caractérisé en ce que** l'opacité du composite à trois couches, mesurée selon la norme DIN 53146 (ISO 2471) est supérieure à 97 %, de préférence est supérieure à 99 %.

9. Stratifié selon l'une quelconque des revendications précédentes, **caractérisé en ce que** la charge de rupture du composite mesurée selon la norme ISO 1924 est comprise entre 40 N/15 mm et 3 000 N/15 mm.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 689181 A
- EP 011274 A
- US 3669822 A
- DE 19535831
- US 20050112345 A1
- US 6706388 B2
- US 20010014392 A1
- US 6235386 B1
- US 5962099 A
- WO 02064365 A
- US 6699541 B2
- US 20040209024 A
- US 20040166344 A
- US 20030037512 A
- US 20030037511 A
- US 20020068136 A
- US 6348246 B
- US 5565252 A
- US 5786064 A
- EP 1586447 A
- EP 0628408 A